# EUROPEAN PATENT APPLICATION

(11) **EP 1 231 772 A2**
(43) Date of publication of application: **14.08.2002**
(21) Application number: 02001707.5
(22) Date of filing: 24.01.2002
(51) Int. Cl.: H04N 1/56

(54) **Output image adjustment for graphics files**

(30) Priority: 09.02.2001 JP 2001034522; 18.07.2001 JP 2001217897
(71) Applicant: SEIKO EPSON CORPORATION, Tokyo 160-0811 (JP)
(72) Inventor: Fukasawa, Kenji, Suwa-shi, Nagano-ken 392-8502 (JP)
(74) Representative: Winter, Brandl, Fürniss, Hübner, Röss, Kaiser, Polte Partnerschaft

(57) **Abstract**

A Makernote data storage area contains a plurality of sets of output device control information Cl designating image output conditions and image output conditions for achieving the best image output results in output devices, given the color reproduction characteristics and image output characteristics of individual output devices. Output device control information Cl includes identifying information as information designating output devices, and output control information for controlling designated output devices. As graphics file GF includes output device control information Cl for a plurality of output devices, Makernote data storage area contains a plurality of combinations of identifying information and output control information corresponding to output device control information Cl.

## Description

### BACKGROUND OF THE INVENTION

### Field of the Invention

The present invention relates to a graphics file and a graphics file output technique. More particularly, the present invention relates to devices, computer program product and methods that related to generated graphics files.

### Discussion of the Background

In contrast to ordinary cameras, whose typical mode of output involves transferring a photographic image onto printing paper, images taken with digital still cameras (DSC) and digital video cameras (DVC) take the form of easily manipulated graphics files which can be output in a number of ways. Graphics file output devices include CRTs, LCDs, printers, projectors, and television receivers.

However, as these output devices have different graphics data reproduction characteristics (such as the range of color they are capable of representing), graphics files generated by a DSC are not necessarily output properly by all output devices. Where, for example, a graphics file generated for the purpose of output on a CRT is output from a printer, the reproduction characteristics of the printer may not match, resulting in improper output. A resultant difficulty is that where it is desired to output a single graphics file from both a printer and a CRT, [manipulating the image] to conform to printer reproduction characteristics may result in an improper display on the CRT, while manipulating it to conform to CRT reproduction characteristics may result in improper output from the printer. This problem is not limited to DSCs, but is also common to other graphics file generating devices such as DVCs.

To solve this problem, some graphics file users employ graphics file processing by way of graphics file retouching software, etc. in order to produce proper output from a desired output device. However, to date it has not been possible to generate a single file adapted to the reproduction characteristics of a plurality of output devices.

### SUMMARY OF THE INVENTION

With the foregoing in view, it is an object of the present invention to provide a graphics file capable of being reproduced correctly by each individual output device among a plurality of output devices. It is a further object to correctly reproduce graphics data with a plurality of output devices.

The present invention, in a first aspect thereof, addresses this problem by providing a graphics data generating device for generating graphics data to be outputted by an output device. The image generating device pertaining to this first aspect includes: a graphics data acquisition mechanism for acquiring the graphics data; an output control data acquisition mechanism for acquiring output control data that designates output conditions for a plurality of output devices, the output control data relating to each individual output device; and graphics data generation mechanism for generating graphics data that is related to the plurality of output control data.

According to the graphics data generating device of this first aspect, there is generated graphics data that is related to output control data that designates output conditions for a plurality of output devices, the output control data relating to each individual output device, whereby graphics data may be reproduced correctly by a plurality of output devices, by way of a single graphics data.

In the graphics data generating device of this first aspect, output control data may include identifying information that identifies each output device. In this case, each output device will determine which output control data is suitable for an individual output device.

The graphics data generating device of this first aspect may additionally include a designating mechanism for designating a plurality of output devices for output of the graphics data. The output control data acquisition mechanism acquires output control data for output devices designated by this designating mechanism. By designating particular output devices, any particular output control data can be designated for relation with the graphics data. The identifying information may include information identifying at least one classification selected from the group of classifications consisting of output device category, output device output format, manufacturer, and output device model name. This allows output control data to be identified as relating to a particular output device, even where output devices falling into the same category are designated.

In the graphics data generating device of this first aspect, the output control data acquisition mechanism may acquire output control data with reference to a classification level designated when the output devices are designated by the designating mechanism. The output control data may include identifying information for identifying the designated output devices, and the identifying information may be a classification designated when output devices are designated by the designating mechanism. This allows output control data to be identified as relating to a particular output device, even where output devices falling into the same category are designated.

In the graphics data generating device of this first aspect, the output device category may include printing devices and display devices. Output device output formats may include xerographic printing, sublimation printing, ink jet printing, CRT display, LCD display, projection display, transmissive display, and reflective display formats. These examples are merely illustrative.

The graphics data generating device of this first aspect may additionally comprise output control data storage mechanism, with the output control data acquisition mechanism acquiring the output control data from this output control data storage mechanism. This allows for rapid acquisition of output control data.

The graphics data generating device of this first aspect may additionally comprise output control data generating mechanism for generating output control data for a designated output device, with the output control data acquisition mechanism acquiring the output control data generated by this output control data generating mechanism. This allows output control data to be generated on the fly with reference to conditions during the designation process.

The graphics data generating device of this first aspect may additionally include graphics data generating mechanism for generating the graphics data, with the graphics data acquisition mechanism acquiring the graphics data generated by this image generating mechanism. This allows the graphics data generating device to function as an imaging device.

In a second aspect, the invention provides a graphics data generating device for generating graphics data to be outputted by an output device. The image generating device pertaining to this second aspect includes: a graphics data acquisition mechanism for acquiring the graphics data; an output control data acquisition mechanism for acquiring output control data that includes identifying information for identifying an output device, and that designates output conditions for an output device; and a graphics data generation mechanism for generating graphics data that is related to the plurality of output control data.

According to the graphics data generating device of this second aspect, it is possible to generate graphics data enabling output by an output device using the appropriate output control data. The graphics data generating device of the second aspect may be embodied in a graphics data generating method or graphics data generating program.

In a third aspect, the invention provides an output control device for outputting graphics data using graphics data and output control data designating output conditions for an output device. The output control device pertaining to this third aspect includes: a graphics data acquisition mechanism for acquiring the graphics data; an output control data acquisition mechanism for acquiring the output control data; a designated output device determining mechanism for determining whether the acquired output control data is output control data designating its parent device; and output control mechanism for performing output control on the basis of the acquired output control data in the event that the acquired output control data is determined to be output control data designating its parent device.

According to the graphics file generating device of this third aspect, where acquired output control data has been determined to be output control data designating the parent device, output control is performed on the basis of this acquired output control data, thereby allowing graphics data to be reproduced correctly by a plurality of output devices, on the basis of appropriate output control data.

The graphics file generating device of this third aspect may additionally comprise predetermined output control data storage mechanism for storing predetermined output control data, with the output control mechanism performing output control on the basis of this predetermined output control data in the event that acquired output control data is determined not to be output control data designating its parent device. This arrangement allows graphics data to be output on the basis of predetermined output control data, even in instances that a graphics file does not include the appropriate output control data.

In the graphics file generating device of this third aspect, the output control data may include identifying information for identifying an output device, with the designated output device determining mechanism determining, on the basis of this identifying information, whether output control data is output control data designating its parent device. This allows an output device to readily determine, on the basis of the identifying information, whether particular output control data is in fact the appropriate data.

In the graphics file generating device of this third aspect, the output control data may include identifying information that consists of at least one classification selected from the group of classifications consisting of output device category, output device output format, manufacturer, and output device model name, and where all of the classifications match the classifications of the device, the designated output device determining mechanism will determine that the output control data is output control data designating its parent device. This enables the use of various kinds of identifying information.

In a fourth aspect, the invention provides a program for generating a graphics file that includes graphics data for output by an output device. The program pertaining to this fourth aspect executes by way of a computer: a function for acquiring the graphics data; a function for designating a plurality of output devices for output of the graphics data; a function for acquiring output control data that designates output conditions for a plurality of output devices, the output control data relating to each individual output device; and a function for generating a graphics file that includes the graphics data and the plurality of output control data.

According to the program of this fourth aspect, working effects similar to those of the graphics file generating device of the first aspect herein are achieved. Additionally, the program of the fourth aspect herein, like the graphics file generating device of the first aspect herein, may be embodied in a number of ways.

In a fifth aspect, the invention provides a program for outputting graphics data using a graphics file that includes graphics data and output control data designating output conditions for an output device. The program pertaining to this fifth aspect executes by way of a computer: a function for acquiring the graphics data from the graphics file; a function for acquiring the output control data from the graphics file; a function for determining whether the acquired output control data is output control data designating its parent device; and a function for performing output control on the basis of the acquired output control data in the event that the acquired output control data is determined to be output control data designating its parent device.

According to the program of this fifth aspect, working effects similar to those of the graphics file generating device of the first aspect herein are achieved. Additionally, the program of the fifth aspect herein, like the graphics file generating device of the first aspect herein, may be embodied in a number of ways.

In a sixth aspect, the invention provides an image output system that includes a plurality of connected output devices, and that outputs graphics data using a graphics file that includes graphics data and a plurality of output control data designating output conditions for the output devices. The image output system according to this sixth aspect includes: an output control data acquisition device for acquiring from the graphics file the output control data for each the connected output device; and an output control device for performing output control of each the output device on the basis of the acquired output control data.

According to the image output system of this sixth aspect, appropriate output control may be performed for each of a plurality of output devices, on the basis of output control data for each output device.

In the image output system of this sixth aspect, the output control data may include identifying information identifying output devices, and the output control data acquisition mechanism may use this identifying information to acquire output control data for the output devices.

In the image output system of this sixth aspect, the output devices may be a printing device and a display device, with the output control data including information relating to color reproduction ranges of the printing device and the display device, and with the output control device performing output control of the printing device on the basis of the color reproduction range of the printing device, and performing output control of the display device on the basis of the color reproduction range of the display device. This enables appropriate output control to be performed for printing devices and display devices, which typically have different color reproduction ranges. It is also possible to reduce or eliminate any differences in color reproduction displayed on a display device and color reproduction output by a printing device that may occur in image processing of graphics data via the display device.

In a seventh aspect, the invention provides an image output system for outputting graphics data using a graphics file that contains graphics data and a plurality of output control data designating output conditions for output devices. The image output system of this seventh aspect includes: a plurality of output devices; and an output control device having the plurality of output devices connected therewith, and for performing output control of the connected output devices on the basis of the output control data.

According to the image output system of this seventh aspect, appropriate output control may be performed for each of a plurality of output devices, on the basis of output control data for each output device.

### BRIEF DESCRIPTION OF THE FIGURES

Figure 1 is an illustrative diagram of an exemplary arrangement for a graphics data output system pertaining to the first embodiment of the present invention.

Figure 2 is a block diagram showing a simplified arrangement for a digital still camera capable of generating a graphics file, and incorporated as an element of a graphics data output system pertaining to the present invention.

Figure 3 is a block diagram showing a simplified arrangement for a printer capable of processing a graphics file, and incorporated as an element of a graphics data output system pertaining to the present invention.

Figure 4 is a block diagram showing a simplified arrangement for a monitor capable of processing a graphics file, and incorporated as an element of a graphics data output system pertaining to the present invention.

Figure 5 is an illustrative diagram showing conceptually an exemplary internal structure for the graphics file employed in the present invention.

Figure 6 is an illustrative diagram showing the general internal structure of a graphics file stored in the Exif file format.

Figure 7 is an illustrative diagram depicting conceptually the structure of Makernote data storage area.

Figure 8 is an illustrative diagram depicting conceptually the arrangement of identifying information.

Figure 9 is an illustrative diagram depicting an exemplary relationship of identifying information settings to output devices.

Figure 10 is an illustrative diagram depicting control parameters settable as output control information.

Figure 11 is a flow chart depicting image processing in digital still camera in accordance with the present invention.

Figure 12 is a flow chart showing the processing routine for the image processing by printer and monitor in the present invention.

Figure 13 is a flow chart showing the processing routine for analysis of identifying information in printer and monitor.

Figure 14 is an illustrative diagram showing device identifying information provided to printer (monitor).

Figure 15 is a flow chart of an image processing routine executed on the basis of output device control information by printer according to the present invention.

Figures 16-18 are descriptions of mathematical expressions used for describing conversion processes performed as part of the present invention.

### DESCRIPTION OF THE PREFERRED EMBODIMENTS

A more complete understanding of the present invention will be gained through the following description of the embodiments in the order indicated below, making reference to the accompanying drawings.
A. Arrangement of a graphics data output system
B. Arrangement of a graphics file
C. Image processing in a digital still camera
D. Image processing in a printer and a monitor
E. Other embodiments

### A. Arrangement of a graphics data output system

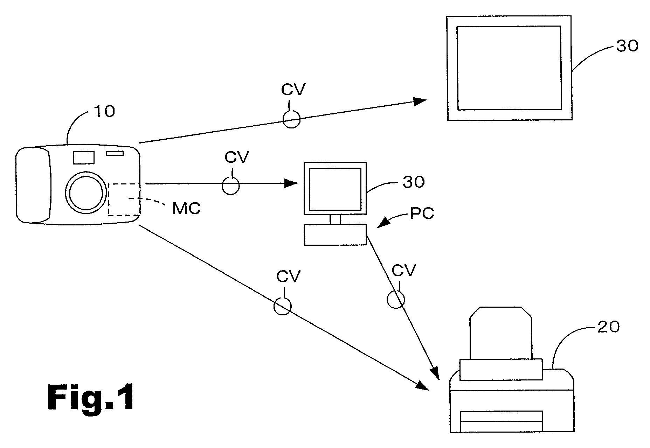

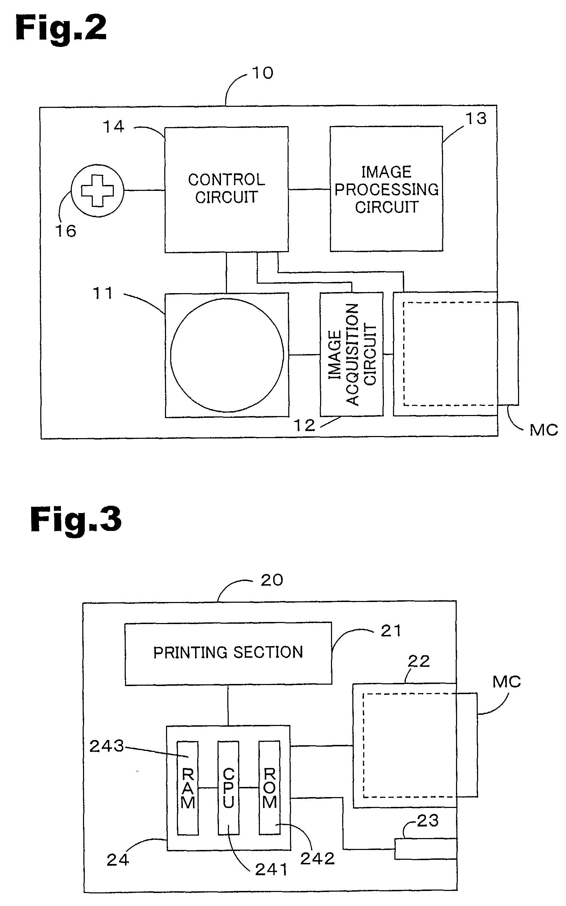

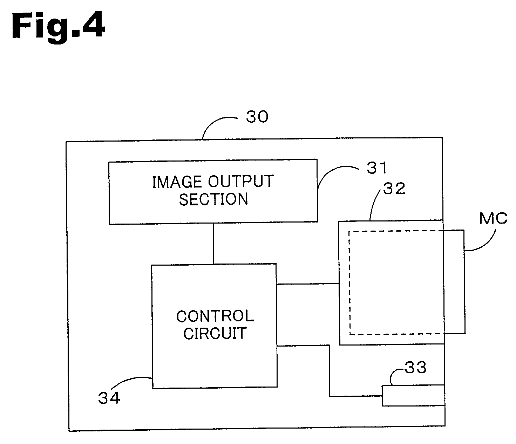

The following description of the arrangement of a graphics data output system pertaining to an embodiment of the invention makes reference to Figs. 1 to 4. Fig. 1 is an illustrative diagram of an exemplary arrangement for a graphics data output system pertaining to the embodiment. Fig. 2 is a block diagram showing a simplified arrangement for a digital still camera capable of generating a graphics file, and incorporated as an element of a graphics data output system pertaining to the embodiment. Fig. 3 is a block diagram showing a simplified arrangement for a printer capable of processing a graphics file GF, and incorporated as an element of a graphics data output system pertaining to the embodiment. Fig. 4 is a block diagram showing a simplified arrangement for a monitor capable of processing a graphics file GF, and incorporated as an element of a graphics data output system pertaining to the embodiment.

The graphics data output system herein includes a digital still camera 10 serving as an input device for generating a graphics file; a personal computer PC for performing image processing on the basis of a graphics file generated by digital still camera 10; a color printer 20 serving as an output device for outputting graphics data processed by personal computer PC; and a monitor 30. Color printer 20 and monitor 30 may be provided with image processing functions for graphics files generated by digital still camera 10.

Digital still camera 10 acquires images by way of imaging optical information with a digital device (e.g. a CCD or photomultiplier); as shown in Fig. 2 it includes an optical circuit 11 for gathering optical information; an image acquisition circuit 12 for controlling the digital device in order to acquire an image; an image processing circuit 13 for processing the acquired digital image; and a control circuit 14 for controlling the various circuits. The digital still camera 10 stores the acquired image as digital data in a memory device, namely, a memory card MC. The format for storing graphics data in a digital still camera 10 is typically the JPEG format, but other storage formats could be employed, such as TIFF, GIF, BMP, or RAW format. Digital still camera 10 is provided with a Select/Set button 16 for selecting and setting various functions.

Printer 20 is an ink-jet printer that forms images by jetting inks of four colors --for example, cyan (C), magenta (M), yellow (Y) and black (K)-- onto a print medium to produce a dot pattern; or an xerographic printer that produces images by transferring and fixing color toner onto a print medium. As shown in Fig. 3, color printer 20 includes a printing section 21 for printing onto a print medium, and that includes a print head or rotating drum; a slot 22 for accommodating a memory card MC; an I/O terminal 23 for sending and receiving data via a cable CV; and a control unit 24 for controlling operation of the components of the printer 20 on the basis of output device control information Cl, described later. Control unit 24 includes a central processing unit (CPU) 241 for executing various operations; a read-only memory (ROM) 242 for non-volatile storage of programs for execution by CPU 241, etc.; and a random access memory (RAM) 243 for temporary storage of results of operations performed by CPU 241, and acquired data. The flow of image processing performed by control unit 24 will be described in greater detail later.

Monitor 30 is a display device of cathode ray tube (CRT) or liquid crystal display (LCD) type, for example. As shown in Fig. 4, it includes an image output section for driving a deflection yoke or liquid crystals to output an image; a slot 32 for accommodating a memory card MC; an I/O terminal 33 for sending and receiving data via a cable CV; and a control unit 24 for controlling operation of the components of the monitor 30 on the basis of output device control information Cl, described later.

A graphics file GF generated by digital still camera 10 is sent to the printer 20 or monitor 30 via a cable CV and computer PC, or simply via a cable CV. Graphics file GF may also be sent to the printer 20 or monitor 30 via a PC to which the memory card MC of digital still camera 10 is connected, or by directly connecting the memory card MC to the printer 20 or monitor 30.

The DSC 10 may also include an I/O port, such as a USB, IEEE 1394 port, or a wireless port, such as IR or RF, (e.g., Bluetooth compatible). When a "wired" communication channel is used (CV), such a coaxial cable, USB cable, or CAT 5 cable, for outputting the resulting image file, the propagated data signal is sent over the channel as an electric signal. When transmitted over a wireless channel, the propagated data signal is sent as an electromagnetic signal.

### B. Arrangement of a graphics file

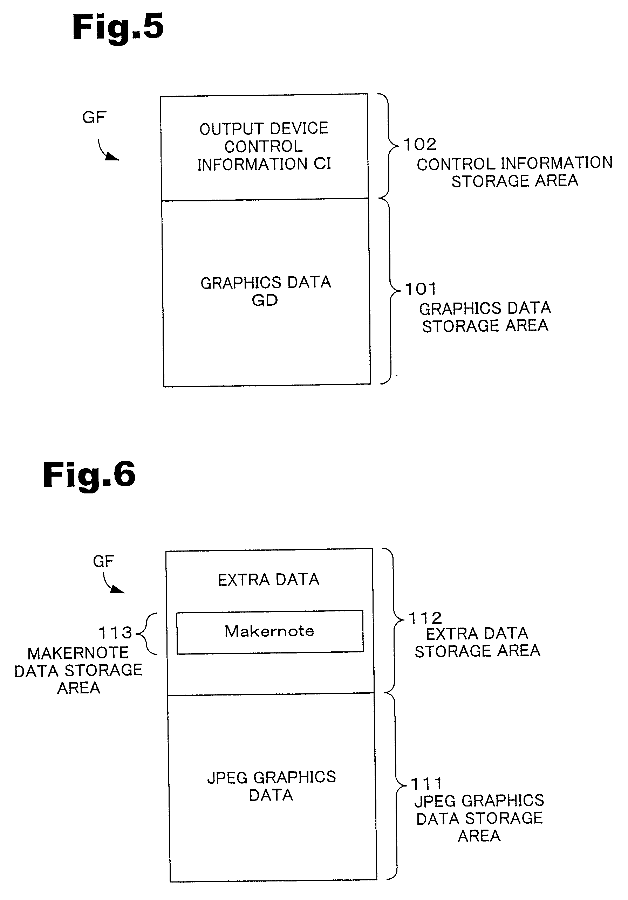

The following description of the graphics file employed in the present embodiment makes reference to Fig. 5. Fig. 5 is an illustrative diagram showing conceptually an exemplary internal structure for the graphics file GF employed in the present embodiment. Graphics file GF contains a graphics data storage area 101 for storing graphics data GD, and a control information storage area 102 for storing output device control information CI for the purpose of controlling graphics data image processing and output operations in personal computer PC, printer 20, etc. Graphics data GD is stored, for example, in JPEG format, while output device control information CI is stored in TIFF format. The terms "file structure", "data structure" and "storage area" herein refer to files or data images stored in a memory device in file or data image form.

Output device control information CI is associated with graphics data GD and output devices 20, 30. In the present embodiment, a plurality of sets of output device control information CI are associated with a single set of graphics data GD, described later. The graphics file GF herein may be generated by a digital still camera 10, or by some other input device (graphics file generating device) such as a digital video camera or scanner. Where the file is generated by a digital video camera, the generated file may be either a video file containing static graphics data and output control information, or a motion video file containing motion video data (in MPEG format, for example) and output control information. Where a motion video file is used, output control may be performed in response to output control information for some or all of the frames of the motion video.

The graphics file GF in the present embodiment basically includes the graphics data storage area 101 and control information storage area 102 described above, and has a file structure in accordance with an existing standardized file format. Compatibility of graphics file GF in the present embodiment with existing standardized file formats is described more specifically hereinbelow.

The graphics file GF in the present embodiment has a file structure in accordance with Exif, the graphics file format specification for digital still cameras, for example. The Exif specification was developed by the Japan Electronics and Information Technologies Industries Association (JEITA). The following description of general structure in the file where the graphics file GF in the present embodiment has a file format in accordance with the Exif file format makes reference to Fig. 6. Fig. 6 is an illustrative diagram showing the general internal structure of a graphics file GF stored in the Exif file format.

The Exif file, i.e. graphics file GF, contains a JPEG graphics data storage area 111 for storing graphics data in JPEG format, and an extra data storage area 112 for storing extra data of various kinds relating to the stored JPEG graphics data. The extra data storage area 112 contains, in TIFF format, photographic information relating to photographic parameters when the JPEG image was taken (e.g. color space used, date, exposure, shutter speed, etc.), and thumbnail graphics data for JPEG images stored in JPEG graphics data storage area 111. When graphics data is written to the memory card MC, this extra information is automatically stored in the extra data storage area 112. The extra data storage area 112 is also provided with a Makernote data storage area 113, an undefined area currently left available by DSC manufacturers. The Makernote data storage area 113 can be used by DSC manufacturers to store any desired information. It is common knowledge to practitioners of the art that the Exif format uses tags to identify data of various kinds.

The Makernote data storage area 113 is also provided with an arrangement whereby stored data can be identified by way of tags. In the present embodiment there is stored output device control information Cl for control of image processing by color printer 20 and monitor 30. Output device control information Cl represents information designating image output conditions for output devices, and is designed to achieve optimal output results given the color reproduction characteristics and image output characteristics of output devices such as color printer 20 and monitor 30.

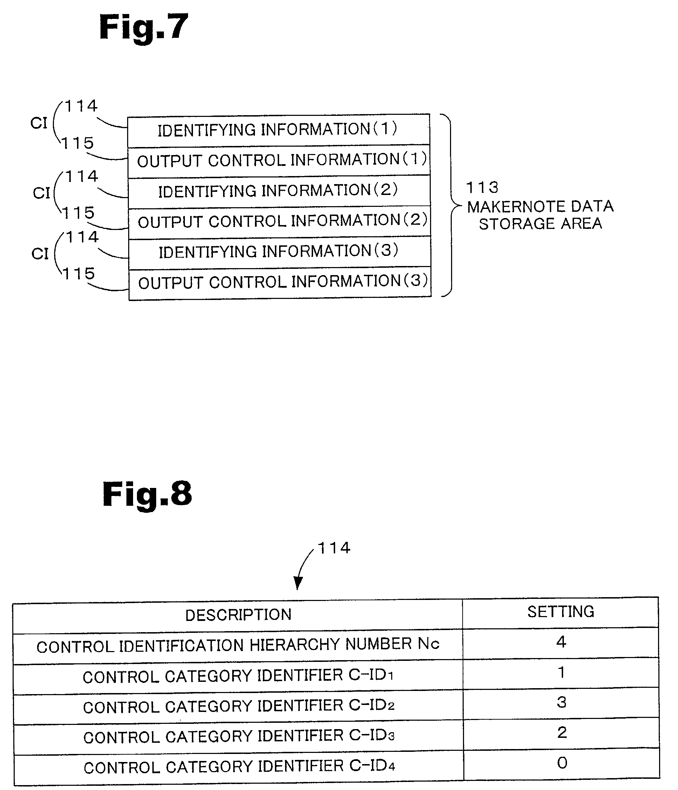

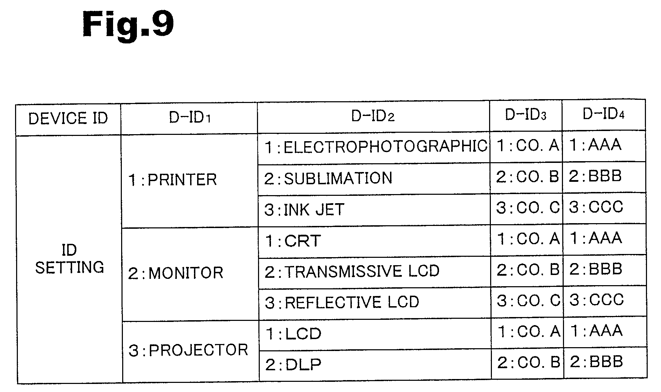

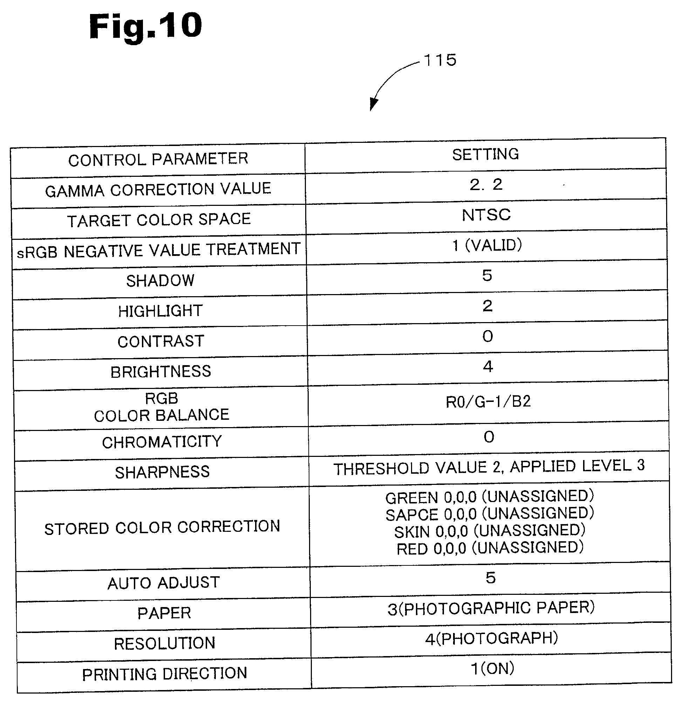

The following description of the arrangement of Makernote data storage area 113 makes reference to Figs. 7 to 10. Fig. 7 is an illustrative diagram depicting conceptually the structure of Makernote data storage area 113. Fig. 8 is an illustrative diagram depicting conceptually the arrangement of identifying information. Fig. 9 is an illustrative diagram depicting an exemplary relationship of identifying information settings to output devices. Fig. 10 is an illustrative diagram depicting control parameters set as output control information.

Referring to Fig. 7, output device control information Cl includes identifying information 114 for designating an output device, and output control information 115 for controlling the designated output device. Since the graphics file GF in the present embodiment includes output device control information CI, the Makernote data storage area 113 has stored therein a plurality of combinations of identifying information 114 and output control information 115, associated with sets of output device control information CI.

The identifying information 114 in the present embodiment has a hierarchical structure like that depicted in Fig. 8. Identifying information 114 includes a control identification hierarchy number Nc --which indicates the number of hierarchical layers of identifying information-- and control category identifiers C-IDn associated with the hierarchy number indicated by control identification hierarchy number Nc. In the example depicted in Fig. 8, the control identification hierarchy number Nc of identifying information 114 is 4, with settings being provided for each of the four control category identifiers C-ID.

The following description of the significance of the settings in the control category identifiers C-ID makes reference to Fig. 9. Each control category identifier C-ID is associated with a device category identifier (device ID) provided to an output device. The first control category identifier C-ID₁ relates to output device category: "1" denotes a printer, "2" a monitor, and "3" a projector. The second control category identifier C-ID₂ relates to output device output type (output format); for a printer, "1" denotes xerographic format, "2" sublimation format, and "3" ink-jet format. For a monitor, "1" denotes CRT format, "2" transmissive LCD format, and "3" reflective LCD format. For a projector, "1" denotes LCD format and "2" DLP (trademark) format.

The third control category identifier C-ID₃ relates to manufacturer name. Like output format, there is a setting for each device category. The fourth control category identifier C-ID₄ indicates the output device model name; like output format and manufacturer name, there is a setting for each device category. Output device model name settings are useful where output device control information Cl indicates special functions provided only in certain models, such as marginless printing, for example. The control category identifier C-ID/device category identifier D-ID associations shown in Fig. 9 are merely illustrative; settings for other identifying features could be made as well.

The following discussion of control parameters included in output control information 115 makes reference to Fig. 10. Output control information 115 includes --by way of information relating to image reproduction characteristics--parameters relating to gamma values and to target color space, and parameters relating to contrast, color balance adjustment, sharpness, and color correction. By way of information relating to control of printer operation, it includes parameters relating to paper quality, resolution, and print head operating direction (unidirectional or bi-directional printing).

As noted, the graphics file GF in the present embodiment contains a plurality of sets of output device control information CI for a single set of graphics data GD. It is therefore possible to achieve proper image reproduction matched to the image reproduction characteristics of individual output devices by way of a single graphics file GF for a plurality of output devices.

Further, print processing conditions for the printer such as paper quality (paper type), resolution, and print head operating direction --in conventional practice these settings are made from the setting screen of the printer driver-- are indicated in the file, thereby solving the problem of incomplete settings for print processing conditions, a problem which cannot be solved simply by correcting image qualities of print data. It is accordingly possible to print graphics data with the proper print processing conditions for particular image qualities, thereby giving print output that better reflects the intentions of the person creating the graphics file.

### C. Image processing in a digital still camera

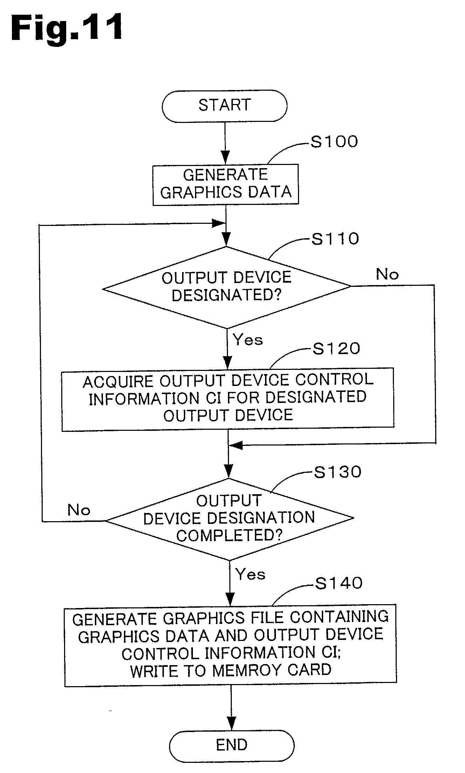

The following description of image processing in a digital still camera 10 makes reference to Fig. 11. Fig. 11 is a flow chart depicting image processing in digital still camera 10 in accordance with the present embodiment.

The control circuit 14 of digital still camera 10 acquires graphics data GD generated in response to a photograph request, for example, depression of the shutter button (STEP S100). Control circuit 14 then determines whether the user has designated a desired output device (STEP S110). An output device is designated by selection and designation of output device category, output format, output device manufacturer name, output device model name, etc. An output device selection tree for selectable classifications is stored in a storage device in control circuit 14, and is displayed on a display screen (not shown) during the selection process. The user can select and designate the desired output device from the selection tree by operating the Select/Set button 16.

Upon determining that an output device has been designated (STEP S110: Yes), control circuit 14 acquires the output device control information CI --including identifying information 114 and output control information 115-- for the designated output device (STEP S120). Depending on the manner of output device designation, the identifying information 114 in output device control information Cl will contain one or a plurality of control category identifiers C-ID. The output control information 115 in a given set of output device control information Cl will have control information of different levels, depending on the number of control category identifiers C-ID. As noted, the output control functions possible in certain devices cannot be utilized unless the model number of the output device is stipulated as a control category identifier C-ID. A greater number of control category identifiers C-ID (hierarchy number) allows for more advanced settings of output control functions.

If control circuit 14 determines that no output device has been designated (STEP S110: NO), it does not acquire output device control information Cl. Control circuit 14 then determines whether output device designation has been completed (STEP S130). This determination may be made, for example, on the basis of an output device selection complete indication input by way of Select/Set button 16. If control circuit 14 determines that output device designation is not completed (STEP S130: No), it returns to STEP S110 and executes another output device designation routine. If, on the other hand, control circuit 14 determines that output device designation has been completed (STEP S130: Yes), it generates a graphics file GF containing the generated graphics data GD and the designated plurality of sets of output device control information CI, writes this to the memory card MC, and then terminates the routine (STEP S140).

The digital still camera 10 according to the present embodiment can designate a plurality of output devices for which output of graphics data GD is desired, and can generate a graphics file GF that includes output device control information Cl appropriate for the designated output devices. This allows suitable output results to be produced by output devices having different image reproduction characteristics, such as printer 20 and monitor 30, by way of a single graphics file GF. Where, for example, image processing is performed by a personal computer PC, output device control information CI reflecting image reproduction characteristics of monitor 30 can be used for image processing of graphics data GD for output on monitor 30 while output device control information CI reflecting image reproduction characteristics of printer 20 can be used for image processing of graphics data GD for output printer 20, thereby reducing or eliminating any differences the perception (reproduction) of graphics data DG in monitor 30 and the perception (reproduction) of graphics data DG in printer 20.

In the preceding description, there is generated a graphics file GF containing output device control information Cl appropriate for output devices designated by way of selection and designation of arbitrary output devices; however, the selection/designation operation could be omitted, instead generating a graphics file GF that contains some or all of a number of predetermined sets of output device control information Cl. With this arrangement, identification of output device control information Cl appropriate for an output device and control of the output device on the basis of the identified output device control information CI, are performed on the output device side. Alternatively, where no output devices are designated in the process described above (STEP S110: NO), some or all of a plurality of sets of output device control information Cl (a number of predetermined sets of output device control information CI) could be acquired to generate a graphics file GF that contains a plurality of sets of output device control information CI.

### D. Image processing in printer 20 and monitor 30

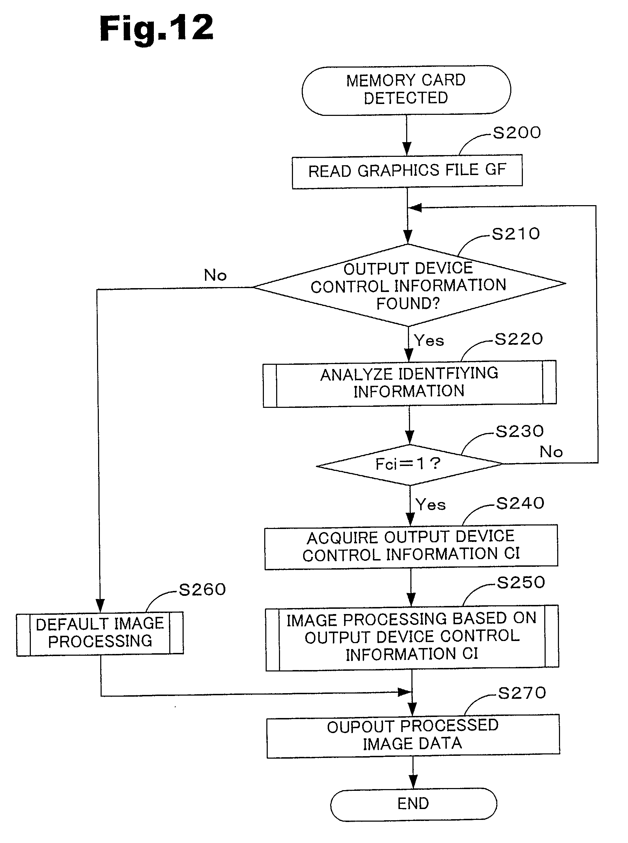

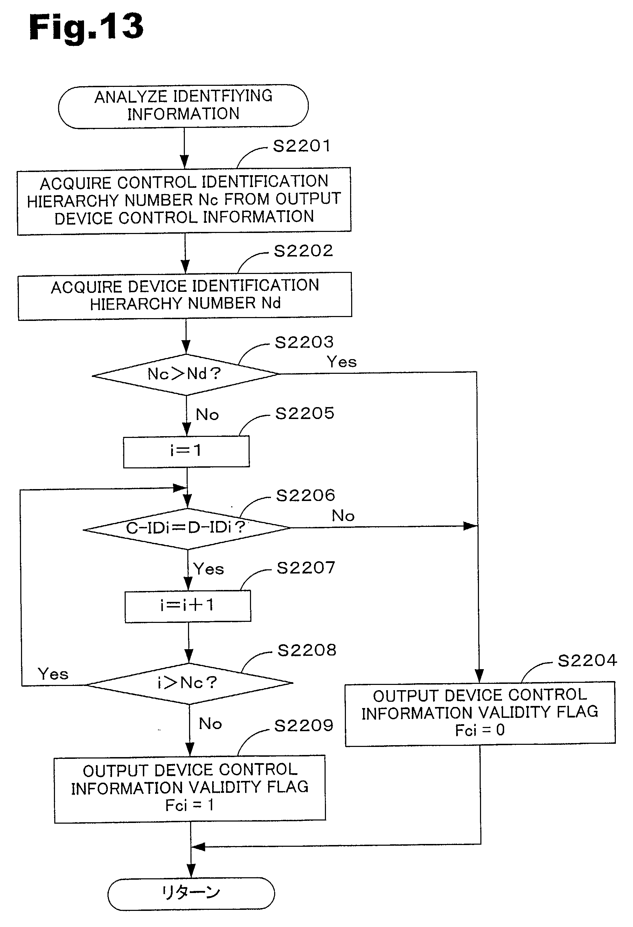

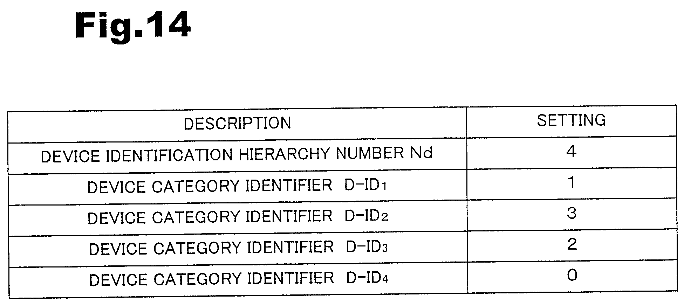

Image processing in printer 20 and monitor 30 is now described with reference to Figs. 12 -14. Fig. 12 is a flow chart showing the processing routine for the image processing by printer 20 and monitor 30 in the embodiment. Fig. 13 is a flow chart showing the processing routine for analysis of identifying information in printer 20 and monitor 30. Fig. 14 is an illustrative diagram identifying information provided to printer 20 (monitor 30). While the following description is made with reference to the printer 20, the process would be similar for the monitor 30.

When a memory card MC is inserted in slot 22, the control circuit 24 (CPU 241) of printer 20 reads out a graphics file GF from memory card MC, and temporarily places the graphics file GF in RAM 243 (STEP S200). CPU 241 searches for the output device control information Cl from the Makernote data storage area 113 of the read out graphics file GF, and if it detects output device control information Cl (STEP S210: Yes), it acquires the appropriate output device control information Cl by acquiring an arbitrary set of output device control information Cl and performing an identifying information analysis process to analyze the identifying information contained in the output device control information CI (STEP S220).

The following description of the identifying information analysis process makes reference to Fig. 13. CPU 241 first acquires the control identification hierarchy number Nc from the identifying information contained in the selected and acquired output device control information Cl (STEP S2201). CPU 241 then acquires the device identification hierarchy number Nd from the device identifying information stored in ROM 242 (STEP S2202). CPU 241 then determines whether the control identification hierarchy number Nc is greater than the device identification hierarchy number Nd (STEP S2203). This reason is that if the control identification hierarchy number Nc is greater than the device identification hierarchy number Nd, the level indicated by the control category identifier C-ID --i.e., a more specific output device-- cannot be designated, and control of the desired output device cannot be achieved by way of the output device control information Cl.

If CPU 241 determines that the control identification hierarchy number Nc is greater than the device identification hierarchy number Nd (STEP S2203: Yes), it sets an output device control information validity flag Fci --which indicates whether output device control information Cl is valid-- to "0", i.e., invalid, and returns to the main routine shown in Fig. 12.

If CPU 241 determines that the control identification hierarchy number Nc is equal to or less than the device identification hierarchy number Nd (STEP S2203: No), it sets the device category identifier D-IDi and control category identifier C-IDi hierarchy level, i.e. i, to 1. CPU 241 then determines whether the first device category identifier D-ID₁ equals the first control category identifier C-ID₁ (STEP S2206). That is, it determines whether there is a match for the product category representing the largest designated category. If the first device category identifier D-ID₁ does not equal the first control category identifier C-ID₁, CPU 241 determines that the selected output device control information Cl is not control information directed to the printer (STEP S2206: No), and it proceeds to STEP S2204, sets the output device control information validity flag Fci to "0", and returns to the main routine shown in Fig. 12.

If CPU 241 determines the first device category identifier D-ID₁ equals the first control category identifier C-ID₁, it determines that the selected output device control information Cl is control information directed to the printer (STEP S2206: Yes), and increments the hierarchy level i by 1 (i = i + 1) (STEP S2207). CPU 241 then determines whether the hierarchy level i is greater than the control identification hierarchy number Nc (STEP S2208). If it determines that i > Nc (STEP S2208: Yes), it returns to STEP S2206, and compares the second control category identifier C-ID₂ with the second device category identifier D-ID₂ to determine if they are equal. Control category identifies C-IDi and device category identifiers D-IDi are subsequently compared by serially incrementing the hierarchy level, until reaching a hierarchy level i equal to the control identification hierarchy number Nc.

If CPU 241 determines that hierarchy level i is now equal to the control identification hierarchy number Nc (STEP S2208: Yes), it sets output device control information validity flag Fci to "1", to "valid", and then returns to the main routine shown in Fig. 12. The reason is that when hierarchy level i is equal to control identification hierarchy number Nc comparison of control category identifier C-ID and device category identifier D-ID for all identifying information to be identified by way of the output device control information CI is complete, and the selected output device control information CI is the appropriate control information for printer 20.

Returning now to Fig. 12, CPU 241 then determines whether the output device control information validity flag Fci equals "1", i.e. whether it is valid (STEP S230). If CPU 241 determines that the output device control information validity flag Fci equals "1" (STEP S230: Yes), since the selected output device control information Cl is the appropriate output device control information Cl for printer 20, it is acquired for use as the output device control information CI for image processing (STEP S240).

If CPU 241 then determines whether the output device control information validity flag Fci equals "0" (STEP S230: No), it determines that the selected output device control information CI is not the appropriate output device control information CI for printer 20. It then acquires a different set of output device control information Cl and searches for output device control information Cl appropriate for printer 20 (STEPS S210-S230).

Using appropriate output device control information Cl, CPU 241 then performs image processing on the basis of the output device control information Cl (STEP S250). Image processing will be described later.

If CPU 241 cannot find appropriate output device control information Cl (STEP S210: No), it performs default image processing using image processing information stored in ROM 242 (STEP S260). The reason is that if the graphics file GF does not contain appropriate output device control information CI, using inappropriate output device control information CI may actually result in impaired image processing results.

CPU 241 outputs (prints out) the graphics data GD image processed in STEP S250 or STEP S260 and then terminates the routine.

While the preceding description takes printer 20 as an example, the process would be similar for monitor 30. Of course, in the case of monitor 30 the image-processed graphics data GD will be output on a display.

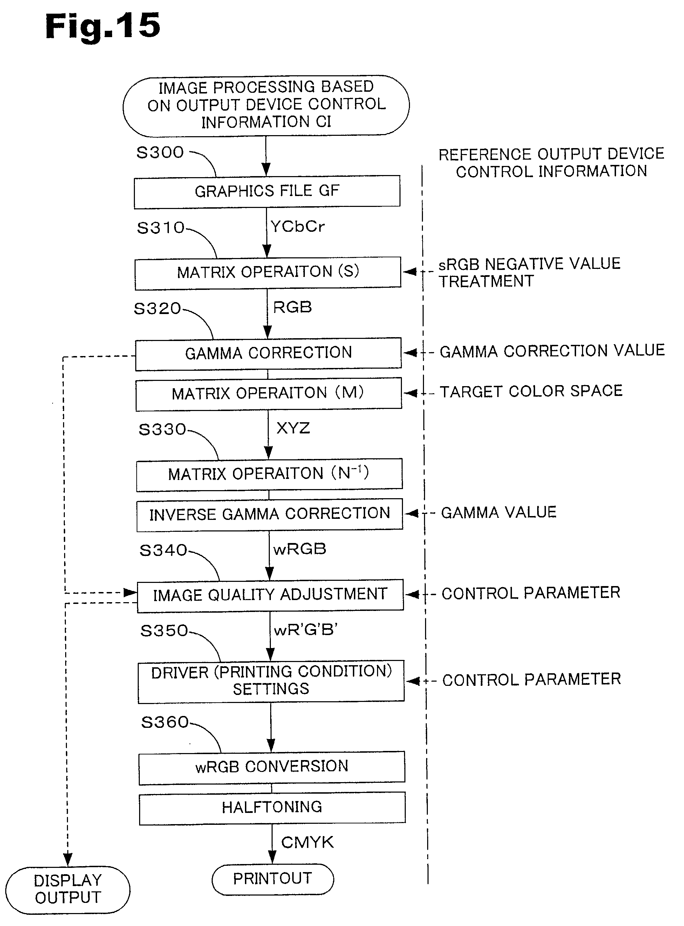

The following detailed description of image processing based on output device control information Cl in printer 20 makes reference to Fig. 15. Fig. 15 is a flow chart of an image processing routine executed on the basis of output device control information Cl by printer 20 according to the present embodiment. The CPU 241 of printer 20 acquires the graphics data GD from the read out graphics file GF (STEP S300). It then performs a 3 x 3 matrix operation S to convert graphics data in the YCbCr color space to graphics data in the RGB color space (STEP S310). As noted, digital still camera 10 stores graphics data as JPEG format files, and as the graphics data GD is represented in an YCbCr color space it must be converted into a standard RGB color space used by personal computers PC etc.

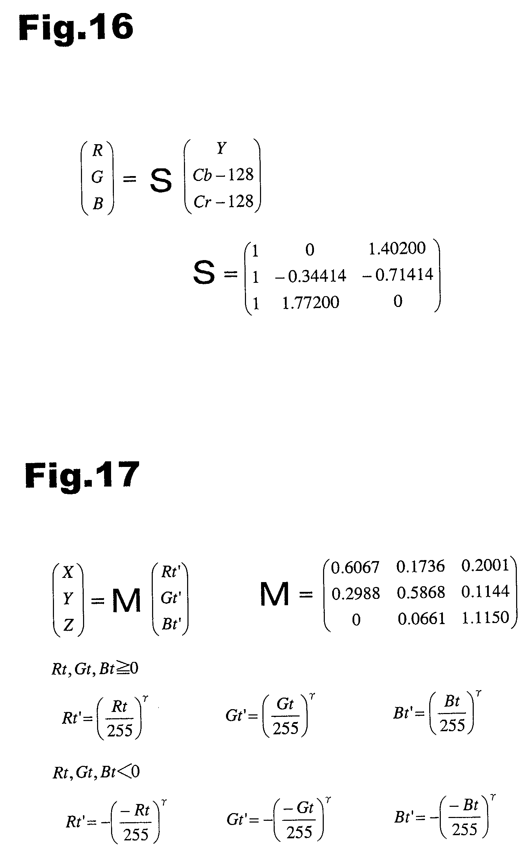

The standard matrix operation used to convert the YCbCr color space to the RGB color space is defined as matrix S. CPU 241 performs the equation shown in Figure 16.

When performing this matrix operation S, CPU 241 refers to an sRGB negative value processing parameter included among the parameters described previously. If the sRGB negative value processing parameter is set to "1", i.e., valid, CPU 241 stores the converted RGB values as-is, even if negative RGB values are present. If, on the other hand, the sRGB negative value processing parameter is set to "0", i.e., invalid, converted RGB values are stored assigning "0" to negative values if any negative RGB values are present. Where the sRGB color space is represented by 256 gradations (0 -255), values above 256 may be present in addition to negative values.

CPU 241 performs gamma correction and a matrix operation M --using a matrix M-- on the resultant RGB color space graphics data (STEP S320). This process is executed with reference to control parameters contained in the output device control information CI: CPU 241 refers to the gamma correction value in the output device control information CI to perform gamma conversion of the graphics data using a gamma correction value setting. Matrix M is an operation for converting the RGB color space to an XYZ color space; when performing matrix operation M, in order to reflect the designated target color space, CPU 241 refers to the target color space included among the parameters described previously, acquires matrix M matrix values for the color space setting (NTSC in the present example), and performs the matrix operation M. Matrix operation M is given by the equation shown in Figure 17.

The color space of graphics data GD resulting from matrix operation M is an XYZ color space. To date, sRGB is the default color space used in image processing in printers and computers, and thus it has not been possible to effectively utilize the color space employed by digital still cameras 10. According to the present embodiment, however, graphics file GF contains output device control information CI that designates a target color space for a printer, etc., and there is employed a printer (printer driver) that modifies the matrix (M) used for the matrix operation M, depending on the designated target color space. Accordingly, the color space of the digital still camera 10 can be utilized effectively to achieve correct color reproduction.

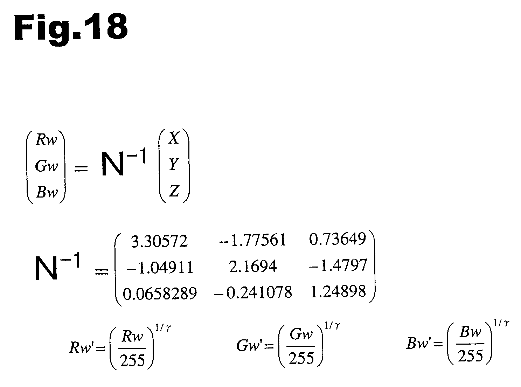

In order to perform image adjustment on the basis of other output device control information Cl, CPU 241 performs a process for converting the color space of graphics data GD from the XYZ color space to the wRGB color space. Specifically, it performs a matrix operation N⁻¹ and inverse gamma correction (STEP S330). The wRGB color space has a wider reproducible color range than the sRGB color space. During gamma correction, CPU 241 refers to the printer 20 gamma value included among the parameters described earlier, and uses the inverse of the gamma value setting to perform inverse gamma correction on the graphics data. When executing the matrix operation N⁻¹, CPU 241 acquires from ROM 242 a corresponding matrix (N⁻¹) for conversion to the wRGB color space, and performs the matrix operation.
Matrix operation N⁻¹ is given by the equation shown in Figure 18.

The color space of the graphics data GD resulting from matrix operation N⁻¹ is the wRGB color space. As noted, the wRGB color space has a wider gamut than the sRGB color space, and corresponds to the color space that can be generated by digital still camera 10.

CPU 241 performs automatic image adjustment to impart features to the image (STEP S340). Here, processing is performed in accordance with control parameters contained in the output device control information Cl. When performing automatic image adjustment, CPU 241 analyzes the graphics data GD to acquire characteristic parameters indicating image quality for graphics data GD. CPU 241 then refers to certain control parameter values --specifically the parameter values for brightness, sharpness etc., and on the basis of these control parameter values corrects predetermined standard parameter values for the characteristic parameters. CPU 241 corrects these characteristic parameters so as to bring them into approximation with the corrected standard parameter values to perform image adjustment of the graphics data. Values for the parameters in the output device control information Cl in the present embodiment are given in the table in Fig. 10.

CPU 241 refers to output device control information CI to acquire parameters relating to, for example, print medium (paper) type, resolution, and printing direction (unidirectional or bi-directional printing), and sets printing conditions in the printer driver (STEP S350). Where a photograph is to be printed, the paper setting is set to photographic paper, resolution is set to photo mode, and bi-directional printing is set to OFF (i.e., set to unidirectional printing). Since print driver settings are made on the basis of output device control information Cl in this way, there is no need for the user to [manually] set conditions in the printer driver settings screen.

CPU 241 now performs wRGB conversion and halftone processing for printing (STEP S360). In the wRGB conversion process, CPU 241 refers to a lookup table (LUT) for CMYK color space conversion, associated with the wRGB color space and stored in ROM 31, and converts the graphics data from the wRGB color space to a CMYK color space. Specifically, graphics data consisting of R · G · B grayscale values is converted, for example, to grayscale data for each of six colors C · M · Y · K · LC · LM. The conversion lookup table is included in one of the elements for determining the color reproduction characteristics of printer 20.

CPU 241 performs interlacing to arrange the graphics data --which has been converted to a format indicating whether or not a dot should be printed-- into the order in which it will be sent to the printing section 241, and then performs printout.

In the present embodiment, output processing of graphics data GD using graphics file GF has been described taking the example of printer 20; however, as noted, the process can be performed in monitor 30 etc. Where image processing based on output device control information CI is performed by monitor 30, image processing is performed as indicated by the broken line in Fig. 15, for example. Since the target color space for monitor 30 is the sRGB color space, color space conversion using matrix M or N⁻¹ is not performed; image processing is performed on the basis of the output device control information CI. Nor is color space conversion to the CMYK color space using the LUT performed; the image-adjusted graphics data GD is displayed on the CRT by firing [an electron beam from] an electron gun for the R, G and B components, and [deflecting the beams] by way of a deflection yoke driven by image output section 31. Alternatively, image output section 31 may drive liquid crystals provided for the R, G and B components, to display the image on the screen.

In the preceding embodiment, all image processing is preformed in the printer 20 or monitor 30, with the image-processed graphics data being printed onto a print medium or displayed on a CRT. However, some or all of the image processing could be performed by a computer. In this case, the image processing function, as described with reference to Figs. 12 and 13, is assumed by a graphics data processing application installed on the computer's hard disk, etc.. The graphics file GF generated by digital still camera 10 is provided to computer PC via a cable or memory card MC. On the computer PC, the application is run under user control in order to read the graphics file GF, analyze the output device control information Cl, and convert and adjust the graphics data GD. Alternatively, the application be designed to run automatically when it is detected that a memory card MC has been inserted or that a cable CV has been plugged into I/O terminal 23, 33, so that reading of the graphics file GF, analysis of the output device control information CI, and conversion and adjustment of graphics data GD are performed automatically. The computer PC acquires the appropriate output device control information CI for each connected output device and performs image processing on the graphics data GD. The image-processed graphics data GD is output appropriately by the output devices.

According to the printer 20 (monitor 30) pertaining to the embodiment described hereinabove, output device control information CI suitable for a particular device is identified and acquired from a graphics file GF that contains a plurality of sets of output device control information CI, and image output processing --including image processing-- can be performed on the basis of the acquired output device control information Cl. Accordingly, image output processing may be performed in a manner appropriate for each of a plurality of output devices with different image reproduction characteristics --such as a printer 20 and a monitor 30-- using only a single graphics file GF.

The printer 20 (monitor 30) pertaining to the present embodiment handle graphics files GF that contain a plurality of sets of output device control information Cl according to the present embodiment. The printer 20 (monitor 30) pertaining to the present embodiment may correspond to the digital still camera 10 according to the present embodiment.

Where image processing is performed via a personal computer PC rather than independently by printer 20 (monitor 30), [the computer] will use output device control information Cl appropriate to monitor 30 to perform image processing on graphics data GD for output to monitor 30, and output device control information Cl appropriate to printer 20 to perform image processing on graphics data GD for output to printer 20. Thus, the personal computer PC can be used, when performing retouching for example, to match or substantially match graphics data GD perception (reproduction) by the monitor 30 with graphics data GD perception (reproduction) by the printer 20.

According to the graphics data output system pertaining to the present embodiment, settings for gamma value and target color space used in printer 20 (monitor 30) or personal computer PC are made by output device control information Cl. It is therefore possible to reduce or eliminate differences in graphics data reproduced in the digital still camera which generates the graphics file GF on the one hand, and graphics data reproduced in the printer 20 or monitor 30 on the other. This affords correct color reproduction of the graphics data.

Characterizing features of an image --such as sharpness, brightness, and other parameters representing the intent of the photographer-- can be indicated in output device control information Cl for a plurality of output devices, thereby allowing the image processing desired during creation of the graphics file GF to be reproduced in a plurality of output devices, without the need for photo retouching.

Since printing conditions for printer 20 are set on the basis of output device control information CI, there is no need for the user to set printing conditions --such as print medium type, resolution, and printing direction-- from the printer driver settings screen. This eliminates the risk of a user selecting improper printing conditions for the graphics data, and prevents any decline print quality due to improper print settings. The user can therefore more faithfully produce the printed result intended by the creator of the graphics file.

### F. Other Embodiments

While the preceding embodiment employs a printer 20 and monitor 30 as output devices, other display devices, such as a projector, could also be used. Depending on the display device used as the output device, an image processing program (display driver) could be run in order to execute the image processing described with reference to Figs. 12-15.

While the graphics file, graphics file generating device and graphics file-capable output devices herein have been described with reference to a certain preferred embodiment, the embodiment described hereinabove is intended to facilitate understanding of the invention, and should not be construed as limiting. Various modifications and improvements are possible without departing from the spirit and scope of the invention as recited in the claims, and these equivalents shall be considered as being included in the invention.

Whereas in the preceding embodiment, matrix M and matrix N⁻¹ operations are performed independently when converting color space characteristics from the sRGB color space to the wRGB color space, it would be possible to employ a composite matrix (MN⁻¹) composed from matrix M and matrix N⁻¹ for the matrix operation. Any of various conversion matrices may be composed if necessary. Composite matrices enable series of matrix operations to be performed more rapidly.

Whereas in the preceding embodiment, output device control information Cl includes the parameters of gamma value, target color space, and sharpness, selection of parameters for inclusion in output device control information is arbitrary.

The parameter values given in the chart in Fig. 10 are merely exemplary and imply no limitation of the invention. Likewise, the matrix S, M and N⁻¹ values in the Equations are merely exemplary, and may be modified as appropriate with reference to the color space that can be handled by printer 20 or monitor 30, and other such considerations.

While an embodiment have been described hereinabove with the example of a digital still camera 10 as the graphics file generating device, a scanner, digital video camera, or other device could be used. Where a scanner is used, designation of output device control information for graphics file GF may be performed on a computer PC, or by the scanner itself, by providing the scanner with a Preset button having settings information pre-assigned to it for setting information, or a Settings button and a display screen for making settings.

The color spaces used in the preceding embodiment are merely exemplary, it being possible to use alternative color spaces. It is sufficient for the graphics file generated by the graphics file generating device to provide a predicted output result from the output device, or designated output house [typographical error?] result.

While the preceding embodiment describes an Exif format file as a specific exemplary graphics file GF, the graphics file format herein is not limited thereto. It is possible to use any graphics file that includes graphics data for output by an output device, and output device control information Cl designating graphics data output conditions (image quality adjustment parameters) for the output device. The use of such files minimizes differences in output image between graphics data generated by a graphics data generating device (image display through the agency of a monitor etc.) and the image output by the output device. Characterizing features may be appended to the output image in an output device simply by transmitting the graphics file to the output device.

Graphics files GF that contain graphics data and output device control information CI include files created by generating association data associated with output device control information Cl, and storing the graphics data and output device control information Cl in separate files so as to enable the graphics data and output device control information Cl to be associated by referring to this association data during image processing. While in this case graphics data and output device control information Cl are stored in separate files, during image processing using the output device control information CI, the graphics data and output device control information Cl are indivisibly united, so functionality is substantially the same as with storage in a single file. That is, the use of associated graphics data and output device control information CI --at least during image processing-- is included in the definition of "graphics file GF" herein. Motion video files stored on optical media such as CD-ROM, CD-R, DVD-ROM and DVD-RAM are also included.

The digital still camera 10, printer 20 and monitor 30 used in the preceding embodiment are merely exemplary, and the arrangement thereof is not limited to that described in the embodiment. As regards the digital still camera 10, it is sufficient for the device to have, at a minimum, the function of generating a graphics file GF. As regards printer 20 and monitor 30, it is sufficient for these devices to be capable, at a minimum, of analyzing output device control information CI in the graphics file GF herein, and output (print or display) an image in accordance with designated image output conditions.

Obviously, numerous modifications and variations of the present invention are possible in light of the above teachings. For example, features described for certain embodiments may be combined with other embodiments described herein. It is therefore to be understood that within the scope of the appended claims, the invention may be practiced otherwise than as specifically described herein.

## Claims

1. A graphics data generating device for generating graphics data to be outputted by an output device, comprising:
a graphics data acquisition mechanism configured to acquire said graphics data;
an output control data acquisition mechanism configured to acquire output control data that designates output conditions for a plurality of output devices, said output control data relating to respective of said plurality of output devices; and
a graphics data output mechanism configured to relate said graphics data to said plurality of output control data, and to output the related graphics data.

2. A graphics data generating device according to claim 1, wherein:
said output control data includes identifying information for identifying respective of said plurality of output devices.

3. A graphics data generating device according to claim 1, further comprising:
a designating mechanism configured to designate more than one of said plurality of output devices for output of said graphics data, wherein said output control data acquisition mechanism acquires output control data for output devices designated by said designating mechanism.

4. A graphics data generating device according to claim 2, wherein:
said identifying information consists of information identifying at least one classification selected from the group of classifications consisting of output device category, output device output format, manufacturer, and output device model name.

5. A graphics data generating device according to claim 3, wherein:
said output control data acquisition mechanism is configured to acquire output control data with reference to a classification level designated when output devices are designated by said designating mechanism.

6. A graphics data generating device according to claim 5, wherein:
said output control data includes identifying information for identifying said more than one of said plurality of output devices, and
said identifying information is a classification designated when predetermined output devices are designated by said designating mechanism.

7. A graphics data generating device according to claim 4, wherein:
said output device category includes printing devices and display devices.

8. A graphics data generating device according to claim 7, wherein:
said output device output formats include xerographic printing, sublimation printing, ink jet printing, CRT display, LCD display, projection display, transmissive display, and reflective display formats.

9. A graphics data generating device according to claim 1, further comprising:
a data storage device configured to hold output control data,
wherein said output control data acquisition mechanism is configured to acquire said output control data from said data storage device.

10. A graphics data generating device according to claim 1, further comprising:
an output control data generating mechanism configured to generate said output control data for a designated output device,
wherein said output control data acquisition mechanism is configured to acquire said output control data generated by said output control data generating mechanism.

11. A graphics data generating device according to claim 1, further comprising:
a graphics data generating mechanism configured to generate said graphics data,
wherein said graphics data acquisition mechanism acquires said graphics data generated by said graphics data generating mechanism.

12. A computer-executable program for generating graphics data to be outputted by an output device, wherein functions performed by said computer-executable program comprising:
acquisition of said graphics data;
designation of a plurality of output devices for output of said graphics data;
acquisition of output control data that designates output conditions for a plurality of output devices, said output control data relating to respective of said plurality of said output devices; and
generation of graphics data that is related to said plurality of output control data.

13. A graphics data generating device for generating graphics data to be outputted by an output device, comprising:
means for acquiring said graphics data;
means for acquiring output control data that designates output conditions for a plurality of output devices, said output control data relating to each individual output device; and
means for generating graphics data that is related to said plurality of output control data.

14. A method for generating graphics data to be outputted by an output device, comprising steps of:
acquiring said graphics data;
acquiring output control data that designates output conditions for a plurality of output devices, said output control data relating to respective of said plurality of output devices; and
generating graphics data that is related to said plurality of output control data.

15. A method according to claim 14, wherein:
said output control data includes identifying information for identifying respective of said plurality of output devices.

16. A method according to claim 14, further comprising a step of:
designating more than one of said plurality of output devices for output of said graphics data, and acquiring output control data for output devices designated in said designating step.

17. A method according to claim 15, wherein:
said identifying information consists of information identifying at least one classification selected from the group of classifications consisting of output device category, output device output format, manufacturer, and output device model name.

18. A method according to claim 16, wherein:
said acquiring step includes acquiring output control data with reference to a classification level designated when output devices are designated in said designating step.

19. A method according to claim 18, wherein:
said output control data includes identifying information for identifying said more than one of said plurality of output devices, and
said identifying information is a classification designated when output devices are designated in said designating step.

20. A method according to claim 17, wherein:
said output device category includes printing devices and display devices.

21. A method according to claim 20, wherein:
said output device output formats include xerographic printing, sublimation printing, ink jet printing, CRT display, LCD display, projection display, transmissive display, and reflective display formats.

22. A method according to claim 14, further comprising steps of:
holding in memory output control data, and
acquiring said output control data from said memory.

23. A method according to claim 14, further comprising steps of:
generating said output control data for a designated output device; and
acquiring said output control data generated in said generating said output control data step.

24. A memory according to claim 14, further comprising steps of:
generating said graphics data; and
acquiring said graphics data.

25. A graphics data generating device for generating graphics data to be outputted by an output device, comprising:
a graphics data acquisition mechanism configured to acquire said graphics data;
an output control data acquisition mechanism configured to acquire said output control data that includes identifying information for identifying an output device, and that designates output conditions for an output device; and
a graphics data generation mechanism configured to generate graphics data that is related to said plurality of output control data.

26. A graphics data generating device for generating graphics data to be outputted by an output device, comprising:
means for acquiring said graphics data;
means for acquiring output control data that includes identifying information for identifying an output device, and that designates output conditions for an output device; and
means for generating graphics data that is related to said plurality of output control data.

27. A method for generating graphics data to be outputted by an output device, comprising the steps of:
acquiring said graphics data;
acquiring output control data that includes identifying information for identifying an output device, and that designates output conditions for an output device; and
generating graphics data that is related to said plurality of output control data.

28. A computer-executable graphics data generating program for generating graphics data to be outputted by an output device, wherein functions performed by said computer-executable program comprising:
acquisition of said graphics data;
acquisition of output control data that includes identifying information for identifying an output device, and that designates output conditions for the output device; and
generation of graphics data that is related to said plurality of output control data.

29. An output control device for outputting graphics data using graphics data and output control data designating output conditions for an output device, comprising:
a graphics data acquisition mechanism configured to acquire said graphics data;
an output control data acquisition mechanism configured to acquire said output control data;
a designated output device determination mechanism configured to determine whether said acquired output control data is output control data that designates said designated output device from another device; and
an output control mechanism configured to perform output control based on said output control data previously acquired when said output control data previously acquired is determined to be output control data designating from said other device.

30. An output control device according to claim 29, further comprising:
a storage device configured to hold predetermined output control data,
wherein said output control mechanism performs output control based on said predetermined output control data the output control data that is previously acquired is determined not to be output control data designating from said other device.

31. An output control device according to claim 30, wherein:
said output control data includes identifying information for identifying a predetermined output device, and said designated output device determination mechanism operates on said identifying information to determine whether output control data is output control data designated by said other device.

32. An output control device according to claim 30, wherein:
said output control data includes identifying information that consists of at least one classification selected from the group of classifications consisting of output device category, output device output format, manufacturer, and output device model name; and
where all of said classifications match the classifications of the other device, said designated output device determination mechanism is configured to determine output control data that is output control data designated by the other device.

33. An output control device for outputting graphics data using a graphics file that includes graphics data and output control data designating output conditions for an output device, comprising:
means for acquiring said graphics data from said graphics file;
means for acquiring said output control data from said graphics file;
means for determining whether said acquired output control data is output control data that designates said designated output device from another device; and
means for performing output control based on said output control data previously acquired when said output control data previously acquired is determined to be output control data designated by said other device.

34. A method for outputting graphics data using a graphics file that includes graphics data and output control data designating output conditions for an output device, comprising steps of:
acquiring said graphics data from said graphics file;
acquiring said output control data from said graphics file;
determining whether said acquired output control data is output control data that designates said designated output device from another device; and
performing output control based on said output control data previously acquired when said output control data previously acquired is determined to be output control data designated by said other device.

35. A method according to claim 34, further comprising steps of:
storing predetermined output control data, and performing output control based on said predetermined output control data when said output control data previously acquired is determined not to be output control data designated by the other device.

36. A method according to claim 34, wherein:
said output control data includes identifying information for identifying an output device, and said determining step determines based on said identifying information whether output control data is output control data designated by the other device.

37. A method according to claim 34, wherein:
said output control data includes identifying information that consists of at least one classification selected from the group of classifications consisting of output device category, output device output format, manufacturer, and output device model name; and
all of said classifications match the classifications of the other device when said determining step determines output control data is output control data designated by the other device.

38. A computer-executable program for outputting graphics data using a graphics file that includes graphics data and output control data designating output conditions for an output device, wherein functions performed by said computer-executable program comprising:
acquisition of said graphics data from said graphics file;
acquisition of said output control data from said graphics file;
determination of whether said acquired output control data is output control data designated by an other device; and
performing output control based on output control data previously acquired when said acquired output control data is determined to be output control data designated by the other device.

39. An image output system that includes a plurality of connected output devices, and that outputs graphics data using a graphics file that includes graphics data and a plurality of output control data designating output conditions for said output devices, comprising:
an output control data acquisition device configured to acquire from said graphics file said output control data for each said connected output device; and
an output control device configured to perform output control of each said output device based on said acquired output control data previously acquired.

40. An image output system according to claim 39, wherein:
said output control data includes identifying information identifying output devices; and
said output control data acquisition mechanism uses said identifying information to acquire output control data for said output devices.

41. An image output system according to claim 39, wherein:
said output devices include a printing device and a display device;
said output control data includes information relating to color reproduction ranges of said printing device and said display device; and
said output control device performs output control of said printing device based on color reproduction range of the printing device, and performs output control of said display device on the basis of the color reproduction range of the display device.

42. An image output system for outputting graphics data using a graphics file that contains graphics data and a plurality of output control data designating output conditions for output devices, comprising:
a plurality of output devices; and
an output control device having said plurality of output devices connected therewith, and for performing output control of said connected output devices based on said output control data.
